# EUROPÄISCHE PATENTANMELDUNG

(11) **EP 0 821 379 A2**
(43) Veröffentlichungstag der Anmeldung: **28.01.1998**
(21) Anmeldenummer: 97112709.7
(22) Anmeldetag: 24.07.1997
(51) Int. Cl.: H01H 9/56, H02H 9/00

(54) **Schalteinrichtung zum sanften Ein- und Ausschalten der Spannungsversorgung eines Netzspannung betriebenen Gerätes**

(30) Priorität: 24.07.1996 DE 19629832
(71) Anmelder: Kelm, Edmund, 68165 Mannheim (DE)
(72) Erfinder: Kelm, Edmund, 68165 Mannheim (DE)
(74) Vertreter: Weiss, Ursula, Dr.

(57) **Zusammenfassung**

Die Erfindung betrifft eine Schalteinrichtung zum sanften Ein- und Ausschalten der Spannungsversorgung eines mit Netzspannung betriebenen Gerätes, die dadurch gekennzeichnet ist, daß ein Binärzähler (2) mit integriertem Oszillator und ein Relais, insbesondere ein elektronisches Lastrelais (4), mit integriertem Nullspannungsschalter vorgesehen sind. Der Binarzähler (2) ist einerseits mit einer an das Gerät (6) angeschlossenen Dateneingabevorrichtung (8', 8'') und andererseits mit dem Relais (4) verbunden, und das Relais (4) ist derart in die Spannungsversorgungsleitung (16) des Gerätes (6) eingekoppelt, daß mittels des integrierten Nullspannungsschalters ein allmähliches Ein- bzw. Ausschalten der Versorgungsspannung erfolgt.

## Beschreibung

Die Erfindung betrifft eine Schalteinrichtung zum sanften Ein- und Ausschalten der Spannungsversorgung eines mit Netzspannung betriebenen Gerätes, insbesondere eines an einen Rechner angeschlossenen Gerätes, vorrangig eines Monitors, aber auch eines Druckers oder Scanners, mit einem Relais, insbesondere einem elektronischen Lastrelais, das einen integrierten Nullspannungsschalter aufweist und derart in die Spannungsversorgungsleitung des Gerätes eingekoppelt ist, daß mittels des integrierten Nullspannungsschalters ein sanftes Ein- bzw. Ausschalten der Versorgungsspannung erfolgt.

Computeranlagen mit Monitoren, Druckern und Scannern gehören heute zur Ausstattung beinahe jeden Arbeitsplatzes. Bedingt durch Gleitzeitarbeit oder Schichtarbeit laufen diese Geräte in den meisten Betrieben in der Regel 12 bis 24 Stunden. Während dieser Zeit treten immer wieder oft längere Leerlaufzeiten auf, weil der Benutzer seine Tätigkeit am PC unterbricht, um andere Aufgaben zu erfüllen, wie z.B. Besprechnungen zu führen, Telefonate zu tätigen etc, oder auch für Pausenzeiten. Die effektive Benutzungszeit beispielsweise des Monitors beträgt pro Tag oft nur wenige Stunden, d.h. ein Bruchteil der tatsächlichen Betriebszeit des Gerätes. Da der Ein- und Ausschaltvorgang solche Geräte jedoch erheblich mehr belastet als ein Dauerbetrieb, werden sie, vor allem die Monitore, üblicherweise während solcher Unterbrechungen nicht abgeschaltet. Damit geht der Nachteil eines überflüssigen Stromverbrauchs und damit verbundener unnötiger Kosten einher. Die speziell für Monitore als sog. Bildschirmschoner bekannten Softwareeinrichtungen lösen dieses Problem auch nicht; sie bewirken lediglich, daß die Bildschirmröhre vor Einbrennungen geschützt ist, auf die Betriebsleistung des Monitors haben sie keinen (schonenden) Einfluß. Den gleichen Effekt hat die aus der DE 90 12 582 U1 bekannte Vorrichtung zum Dunkel- aber nicht Ausschalten eines Monitors in Abhängigkeit vom Arbeitszustand der übrigen Peripheriegeräte eines Computers.
Um den Stromverbrauch während der Zeit der Nichtbenutzung solcher Geräte zu reduzieren, sind im Stand der Technik sog. "Power-Saver" wie z.B. die "Stand-by"-Schaltungen bekannt. Bei diesen Schaltungen wird das jeweilige Gerät jedoch nicht vom Netz getrennt, sondern nur die Teile, die nicht unmittelbar benötigt werden, werden abgeschaltet bzw. dunkelgetastet. Dadurch werden zwar Teilströme eingespart und die Gesamtstromaufnahme um diese Teilströme verringert, die Betriebszeit bleibt jedoch unverändert. Ein wesentlicher Nachteil dieser "Power-Saver" wie z.B. die "Stand-by"-Schaltungen besteht darin, daß das Gerät, beispielsweise der Monitor, zu irgendeinem Zeitpunkt tₓ der Netzspannungshalbwelle ein- oder ausgeschaltet wird. Durch diesen Schaltvorgang entstehen hohe Ein- und Ausschaltspannungsspitzen, die zur vorzeitigen Zerstörung einzelner Bauteile bzw. des gesamten Gerätes führen können. Diese Gefahr entsteht bei Monitoren dadurch, daß deren Bildröhrenheizung beim schlagartigen Ein- und Ausschalten jedesmal eine extreme mechanische Belastung erfährt.
Aus der DE 34 27 478 A1 ist eine Schalteinrichtung für Geräte mit Netzspannungsbetrieb bekannt, die ein sanftes Einschalten der Spannungsversorgung ermöglichen soll. Zu diesem Zweck umfaßt diese Schalteinrichtung ein Relais mit Nullspannungsschalter, das derart in die Spannungsversorgungsleitung eingekoppelt ist, daß das Einschalten der Versorgungsspannung "allmählich" und damit "sanft" erfolgt, d.h. beim Spannungswert Null beginnend und einer ansteigenden Kurve bis zum Endspannungswert folgend.

Ein sanftes Ausschalten der betreffenden Geräte ist mit dieser bekannten Schalteinrichtung jedoch nicht möglich und sie ist auch nicht dazu geeignet, den Arbeitszustand von Peripheriegeräten eines Computers zu erkennen und dementsprechend die Spannungsversorgung und den Energieverbrauch des Computers zu steuern.

Aufgabe der vorliegenden Erfindung ist deshalb die Bereitstellung einer Schalteinrichtung, mit der nicht nur ein sanftes Einschalten, sondern auch ein sanftes Ausschalten der betreffenden Geräte möglich ist, und die dazu geeignet ist, den Arbeitszustand von Peripheriegeräten eines Computers zu erkennen und dementsprechend die Spannungsversorgung und den Energieverbrauch des Computers zu steuern.

Eine Lösung dieser Aufgabe besteht in der Bereitstellung einer Schalteinrichtung der eingangs genannten Art, die einen Binärzähler mit integriertem Oszillator aufweist, der einerseits mit einer an das Gerät angeschlossenen Dateneingabevorrichtung und andererseits mit dem Relais verbunden ist.

Die erfindungsgemäße Schalteinrichtung schaltet generell nur im Nulldurchgang der Netzspannungskurve ein oder aus. Dadurch ist es möglich, das betreffende Gerät jederzeit komplett vom Netz abzuschalten und bei Bedarf wieder anzuschalten, ohne daß bei einem der Schaltvorgänge schädliche Spannungsspitzen entstehen. Mit der erfindungsgemäßen Schaltungen kann der Stromverbrauch des betreffenden Gerätes, beispielsweise eines Monitors, während der Leerlaufzeiten auf weniger als 1 %, bezogen auf die Betriebszeiten, reduziert werden. Die Reduktion erfolgt automatisch und zur Wiederaufnahme der Benutzung ist es lediglich notwendig, die Dateneingabevorrichung, zu betätigen, worauf das Gerät unverzüglich wieder funktionsbereit ist.
Durch die Softabschaltung des Gerätes während der Leerlaufzeiten und den Softstart bei Wieder-Inbetriebnahme erhöht sich außerdem die Lebensdauer dieses Gerätes erheblich, was wiederum mit einer Kostenersparnis einhergeht.
Neben Energie-und Kostenersparnis bietet die erfindungsgemäße Schalteinrichtung darüberhinaus den Vorteil der erhöhten Arbeitsplatzsicherheit, denn die Brandgefahr durch Implosionen, die von nicht ausgeschalteten elektrischen Geräten, insbesondere (alten) Monitoren, ausgeht, wird hier erheblich vermindert.

In einer vorteilhaften Weiterbildung der erfindungsgemäßen Schalteinrichtung ist ein Zeitglied vorgesehen, mit der die Ausschaltverzögerung des Relais voreingestellt werden kann, d.h. die Zeitspanne zwischen letztmaliger Betätigung der Dateneingabevorrichtung und Deaktivierung des elektronischen Lastrelais (Solid-State-Relais) über den Nullspannungsschalter und damit letztendlich zur Abschaltung der Stromversorgung des betreffenden Gerätes. Das Zeitglied sollte so beschaffen sein, daß Zeitspannen von 1 bis 25 Minuten voreingestellt werden können.

Eine besonders bevorzugte Ausführungsform der Erfindung sieht vor, daß die erfindungsgemäße Schaltung an einen Monitor und/oder Drucker und/oder Scanner und/oder ein anderes, an einen Personalcomputer angeschlossenes Gerät angeschlossen ist und daß die Dateneingabevorrichtung durch die Tastatur und/oder Maus realisiert ist.

Grundsätzlich kann die erfindungsgemäße Schaltung in praktisch jedes elektrische Gerät integriert werden, wobei gegebenenfalls notwendige Veränderungen und/oder Zusätze zur technischen Anpassung von jedem Fachmann problemlos vorgenommen werden können.

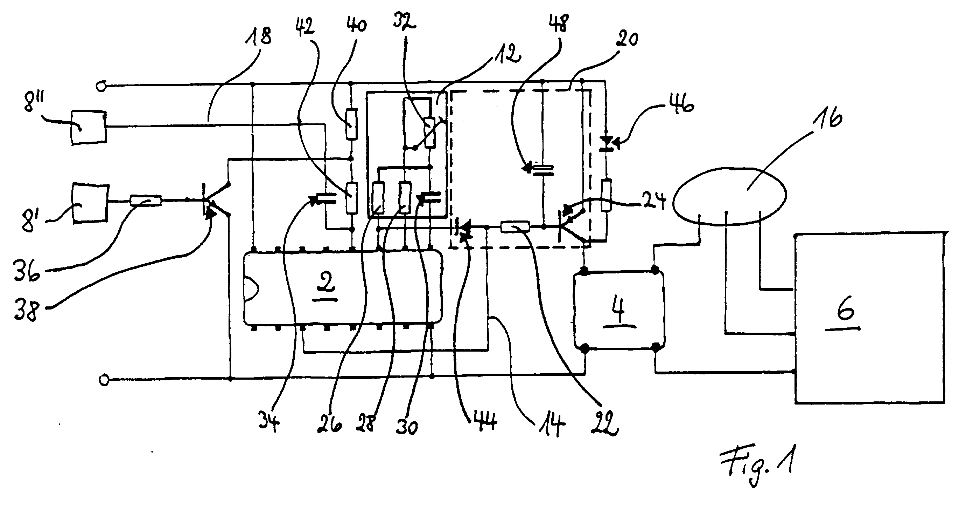

Die Erfindung wird im folgenden anhand eines in der Zeichnung dargestellten Ausführungsbeispiels näher erläutert. Es zeigt
- Die Fig. 1:: einen Schaltplan einer erfindungsgemäßen Schalteinrichtung zur Steuerung der Spannungsversorgung eines PC-Monitors

Die dargestellte Schaltung umfaßt einen Binärzähler 2 mit integriertem Oszillator, der einerseits über Leitungen 18 mit der Tastatur 8' und der Maus 8''verbunden ist. Der Binärzähler 2 ist andererseits über die Leitung 14 mit einem Relais, insbesondere einem elektronisches Lastrelais (Solid-State-Relais) 4 gekoppelt, das in die Netzverbindung 16 des Monitors 6 eingreift. Binärzähler 2 und elektronisches Lastrelais (Solid-State-Relais) 4 sind außerdem über ein Zeitglied 12 miteinander verbunden, das die Ausschaltverzögerung des elektronischenn Lastrelais (Solid-State-Relais) 4 variabel gestalten kann.

### Funktionsmechanismus des in Fig. 1 dargestellten Schaltkreises:

Solange Tastatur oder Maus betätigt werden, wird der Binärzähler auf logisch "0" gesetzt und der Monitor ist in Betrieb. Entfallen diese Signale - weil beispielsweise der Benutzer seine Arbeit unterbrochen hat-, beginnt der Binärzähler die vom Oszillator kommenden Impulse zu zählen und deaktiviert nach Ablauf der an dem Zeitglied voreingestellten Zeitspanne das elektronische Lastrelais (Solid-State-Relais). Dies trennt daraufhin den Monitor sanft vom Netzanschluß ab. Dieser Zustand bleibt solange erhalten, bis eine beliebige Taste der Tastatur gedrückt oder die Maus betätigt wird. Durch die Betätigung von Tastatur oder Maus wird der Binärzähler auf logisch "0" zurück gesetzt, worauf über den integrierten Nullspannungsschalter das elektronische Lastrelais (Solid-State -Relais) den Monitor wieder einschaltet. Dieser Einschaltvorgang erfolgt nicht schlagartig, sondern allmählich, als sogenannter "Soft-Start". Damit wird der hohe Einschaltstrom, der letztendlich zu einer Zerstörung der Heizung des Monitors führen kann, verhindert und dadurch die Lebensdauer des Monitors wesentlich erhöht. Generell sind Ein-und Ausschaltvorgang gleichartig, d.h. sie verlaufen nicht nach Art einer Sprungfunktion, sondern nach Art einer sinusartigen Funktion.

Im Einzelnen funktioniert die in Fig. 1 dargestellte Schaltung wie folgt:
Durch Einschalten des Rechners wird der Binärzähler 2 mit Spannung versorgt. Am Ausgang des Binärzählers 2 liegt ein "Low-Pegel" an und schaltet die Ausgangstreiberstufe 20 über den Vorwiderstand 22 und den Transistor 24 durch, so daß das elektronische Lastrelais 4 über den integrierten Nullspannungsschalter die angeschlossene Netzspannung 16 an den Monitor 6 weiterschaltet. Damit wird ein "Sanflanlauf" auch im Einschaltmoment gewährleistet. Die Widerstände 26 und 28 sowie der Kondensator 30 und der veränderbare Widerstand 32 arbeiten als einstellbarer Oszillator, der ständig Impulse erzeugt, die über den Binärzähler 2 geteilt werden. Solange die an den Rechner angeschlossene Maus oder Tastatur betätigt wird, erhält der Binärzähler 2 einerseits über den Kondensator 34 (im Fall der Maus) bzw. andererseits über die aus dem Widerstand 36 und dem Transistor 38 bestehende Schaltung und den Spannungsteiler 40, 42 (im Fall der Tastatur) Impulse, die den Binärzähler 2 jeweils auf den Zählerstand "0" zurücksetzen.

Wird dagegen weder Maus noch Tastatur betätigt, so zählt der Binärzähler 2 die ankommenden Impulse so lange, bis an seinem Ausgang das Signal "Low-Pegel" auf "High-Pegel" umschaltet. Dieser "High-Pegel"-Zustand sperrt über die Diode 44 den Impulseingang und über den Vorwiderstand 22 und den Transistor 24 das elektronische Lastrelais 4. Der integrierte Nullspannungsschalter sorgt dann beim nächsten Nulldurchgang der Netzspannung 16 für das Abschalten des Monitors 6 von der Netzspannung 16. Gleichzeitig leuchtet die (LED) Anzeige 46 auf und zeigt diesen Zustand an.

Ein neuer Impuls, der durch die Bewegung der Maus oder die Betätigung der Tastatur am Eingang des Binärzählers 2 anliegt, hebt diesen Zustand sofort wieder auf, so daß am Ausgang des Binärzählers 2 wieder "Low-Pegel" anliegt. Über den Vorwiderstand 22 wird jetzt der Kondensator 48 aufgeladen und der Transistor 24 langsam durchgeschaltet, so daß das elektronische Lastrelais 4 durch den integrierten Nullspannungsschalter bei jedem Nulldurchgang der Netzspannungsversorgung bis zu ihrem Maximalwert den Monitor 6 mit der Netzspannung 16 verbindet. Gleichzeitig erlischt die (LED-)Anzeige 46 und der Rechner und der Monitor 6 sind wieder betriebsbereit.

## Patentansprüche

1. Schalteinrichtung zum sanften Ein- und Ausschalten der Spannungsversorgung eines mit Netzspannung betriebenen Gerätes mit einem Relais, insbesondere einem elektronischen Lastrelais (4), das einen integrierten Nullspannungsschalter aufweist und derart in die Spannungsversorgungsleitung (16) des Gerätes (6) eingekoppelt ist, daß mittels des integrierten Nullspannungsschalters ein sanftes Ein- bzw. Ausschalten der Versorgungsspannung erfolgt,
dadurch gekennzeichnet,
daß ein Binärzähler (2) mit integriertem Oszillator vorgesehen ist, der einerseits mit einer an das Gerät (6) angeschlossenen Dateneingabevorrichtung (8', 8'') und andererseits mit dem Relais (4) verbunden ist.

2. Schalteinrichtung nach Anspruch 1, dadurch gekennzeichnet,
daß ein Zeitglied (12) vorgesehen ist, das zur Steuerung der Ausschaltverzögerung des Relais (4) geeignet ist.

3. Schalteinrichtung nach Anspruch 1 oder 2, dadurch gekennzeichnet,
daß das Gerät (6) an einen Rechner angeschlossen ist und daß die Dateneingabevorrichtung (8) als Tastatur (8') und/oder Maus (8'') ausgebildet ist.
